# EUROPEAN PATENT SPECIFICATION

(11) **EP 2 988 957 B1**
(45) Date of publication and mention of the grant of the patent: **07.06.2017**
(21) Application number: 13730929.0
(22) Date of filing: 26.04.2013
(51) Int. Cl.: B60C 25/05

(54) **TYRE-CHANGING MACHINE**
REIFENWECHSELMASCHINE
MACHINE DE CHANGEMENT DE PNEU

(43) Date of publication of application: 02.03.2016
(73) Proprietor: Devel S.r.l., 41042 Fiorano Modenese (MO) (IT)
(72) Inventor: SANTACHIARA, Roberto, I-42015 Correggio (RE) (IT)
(74) Representative: Brunacci, Marco
(86) International application number: PCT/IB2013/000778
(87) International publication number: WO 2014/174331

(56) References cited:
- EP-A1- 1 314 584
- EP-A1- 1 398 184
- US-A- 3 168 130

## Description

### Technical Field

The present invention relates to a machine for the fitting and removal of tyres of vehicle wheels. In particular, the present invention relates to a tyre-changing machine.

### Background Art

As is known, to remove the tyre of a vehicle wheel from the relative rim, the upper bead (also called "first bead", or more generically "bead") of the tyre must first of all be detached from the edge of the rim on which it is fitted (operation also called "bead breaking"). Subsequently, the first bead is hooked and removed from the edge of the rim (bead hook). Finally, the tyre is removed from the rim by pushing it on the opposite side to the first removed bead. To be able to fully remove the tyre from the wheel rim, bead breaking must also be performed for the lower bead (also called "second bead") of the same tyre.

To make such operations easier, the use is known of different types of machines, so-called "tyre-changing machines", suitable for both allowing the removal of the tyre from the rim and for allowing the subsequent phase of tyre fitting on the rim.

Tyre-changing machines generally comprise a base frame, which supports a rotating rim clamping device, which allows starting the rotation of the wheel around a work axis.

With the base frame is also associated an arm orthogonal to the work axis, on which are generally fitted a bead pushing tool and a bead hooking tool.

The arm and/or the rotating clamping device are motor-driven so they can be moved closer to one another.

To remove the tyre from the rim, the tyre bead is initially removed by means of the pushing tool or other equipment with which tyre-changing machines are provided. Afterwards, the hooking tool is inserted between the bead and the edge of the rim to grip the edge of the bead, and is then moved away from the rim, so as to remove the bead.

During this operation, the tyre bead undergoes heavy stress and the tyre is deformed in a more or less elastic way.

To prevent excessive tyre deformation, some tyre-changing machines have a hooking tool fitted on the relative arm in a rotatable way around an axis orthogonal to the rotation axis of the wheel.

During removal of the bead from the rim, the hooking tool is arranged with its rotation axis tangent to the wheel rim and, during rotation, it always remains very close to such edge. Consequently, the edge of the bead does not move far away from the rim and does not undergo particularly heavy stresses.

These tyre-changing machines nevertheless have a number of drawbacks, including the fact that they are not always practical and easy to use.

In this respect, it must be noted that, while the inclination of the hooking tool can be changed, that of the pushing tool cannot. In practice, the pushing tool impacts against the tyre always with the same inclination and, sometimes, this does not permit exercising a perfect thrust on the bead.

In the Italian patent published with nr. IT 1.378.602 in the name of the same holder of this application, a machine is described for fitting and removing the tyres of vehicle wheels, comprising a supporting frame for a rotating clamping device suitable for supporting a vehicle wheel and making it rotate around a work axis, a tyre hooking tool which is associable with the frame and has an elongated portion insertable longitudinally between the tyre bead and the wheel rim for the extraction of the bead, and first and second sliding means associable with the frame and suitable for moving the rotating clamping device and the hooking tool, respectively, along a first parallel direction and a second direction orthogonal to the portion of tool. In this patent, the machine also comprises tilting means of the rotating clamping device around a tilting axis orthogonal to such first and second direction.

The tyre-changing machine described in such patent is more practical to use than the previously known prior-art machines, but nevertheless still has hooking tool positioning which is not perfect with respect to the tyre when the hooking tool itself is inserted between the tyre bead and the edge of the rim to grip the bead and then remove it from the wheel rim.

Other kinds of tyre-changing machines are disclose in the patent documents US 3,168,130, EP 1 314 584 and EP 1 398 184.

### Description of the Invention

The applicant has faced the problem of providing a tyre-changing machine which is easy and practical to use for fitting and removing the tyres of vehicle wheels, making it possible to considerably reduce fitting/removal times, with a consequent reduction in working, labour and maintenance costs.

Consequently, the present invention provides a tyre-changing machine like that indicated in claim 1.

The applicant of the present application has in fact surprisingly found that a machine for fitting and removing vehicle wheel tyres, comprising at least a supporting frame for at least a rotating clamping device suitable for supporting at least a vehicle wheel and making this rotate around a work axis, at least a tyre hooking tool which is associable with the frame and has a substantially elongated portion insertable between the tyre bead and the wheel rim for the extraction of the bead, first sliding means associable with the frame and suitable for moving at least said hooking tool along a first direction substantially parallel to said tool portion, second sliding means associable with the frame and suitable for moving at least said rotating clamping device along a second direction substantially orthogonal to said tool portion, and furthermore tilting means of said rotating clamping device, characterised in fact that said tilting means are suitable for rotating around a tilting axis parallel to said second direction, is able to facilitate the insertion of the hooking tool between the bead and the edge of the rim to grip the edge of the bead and then remove the tyre bead from the wheel rim.

In fact, thanks to the fact that the tilting means rotate around said tilting axis substantially parallel to said second direction, instead of being orthogonal to said second direction as in the aforementioned prior-art patent, the wheel can be momentarily blocked, following said swinging, in an oblique position perfect for allowing said hooking tool to be easily inserted tangentially in the inner channel of the rim between the bead and the edge of the wheel rim. Once the hooking tool has been positioned this way, all it takes is a small rotation of the rotating clamping device around the work axis for the hooking tool, following such wheel rotation, to raise the bead and move it above the rim. Because the wheel is tilted, said small wheel rotation allows the hooking tool to move, above the rim, a larger portion of the bead, compared to the case wherein the wheel is arranged in horizontal position. This way, the detachment of the tyre bead from the wheel rim is made easier and faster.

Furthermore, thanks to the particular tilting of the wheel following the swinging around said tilting axis, the hooking device manages to insert itself suitably inside the internal rim channel, without having to be pressed at length against the tyre before finding a suitable hooking point between the tyre and the rim. This way, the tyre-changing machine of the present invention has the further advantage of preventing the hooking tool from damaging the tyre following difficulty in inserting the hooking tool itself between the bead and the edge of the rim, consequently also facilitating the daily job of the operator of said machine. Furthermore, the tyre-changing machine of the present invention also has the further advantage of performing vehicle wheel tyre removal operations more quickly than prior-art devices.

Another advantage stems from the fact that levers do not have to be used to further lift the bead, and consequently, there is no risk of the tyre being cut by the sharp parts of such levers.

Preferably, said tilting means are suitable for rotating around said tilting axis so the wheel is able to reach an angle between 0° and 45°, a preferred angle being between 5° and 25°, more preferably between 10° and 20° with respect to the tilting axis.

This way, an angle can be achieved that makes removal/fitting easier. Preferably, said frame of the machine of the present invention comprises a support base on the ground that supports said rotating clamping device. Furthermore, preferably, the machine of the present invention comprises a vertical supporting column (hereinafter also called "first column") for said hooking tool which is associated with said base.

Preferably, said hooking tool is fitted on an arm (hereinafter also called "first arm") associable with said supporting column, in a substantially horizontal position. More preferably, said hooking tool is arranged substantially in vertical position, along the longitudinal direction of the column.

This way, thanks to the fact that said tilting means are suitable for rotating around a tilting axis parallel to said second direction, the distance remains constant between said column and the wheel positioned on said rotating clamping device, for the entire duration of swinging. Vice versa, in the prior-art patent mentioned above, because the swinging occurred around a tilting axis orthogonal to said second direction, during swinging, the upper edge of the wheel tilted towards the column until it touched the column itself, thus preventing perfect swinging.

This way, with the machine of the present invention, the advantage is obtained that, once the distance has been adjusted between the clamping device and the column, this remains constant and such distance can therefore be adjusted so as to be able to also use the machine of the present invention to remove/fit tyres of special dimensions, because the wheel can be moved closer to the column than was possible in the above-mentioned prior-art document, without running the risk, during swinging, of the wheel knocking against said column and therefore also against said hooking device positioned on the column itself. In practice, during swinging, the wheel fails to encounter any obstacle, thus permitting the achievement of the desired tilt angle for better operation.

In one embodiment, said hooking tool is rigidly associated with said substantially horizontal arm associable with said column.

In another embodiment, said hooking tool is supported by a tool holding device, said tool holding device being associated with said arm, in correspondence to the extremity of the arm on the opposite side of said column, and being able to rotate around a rotation line along said arm.

Preferably, said tool holding device is able to not only support said hooking tool but also other tools useful for the tyre fitting/removal operations, such as, e.g., a blade or a pushing tool. The purpose of said blade is to penetrate between the bead and the rim. Said pushing tool, preferably with a substantially truncated-cone shape, can instead be used to make it easier to detach the tyre from the wheel rim; in fact, especially in the cases of the wheel not having been handled for a long period of time, the tyre tends to fasten itself onto the wheel rim to an increasing extent, creating a strong adhesion force between tyre and rim, and thus making its detachment difficult when necessary. To overcome such adhesion force between the tyre and the rim, a pressure is therefore applied from above downwards by means of said pushing tool on the tyre when it is still fastened to the rim, obtaining a detachment of the tyre itself from the rim, which makes it easier to perform the tyre removal operations.

In one preferred embodiment, said tool holding device is able to support a first tool, such as, e.g., said hooking tool, and a second tool, such as, e.g., said pressure device or said blade, positioned in correspondence to the two opposite extremities of said tool holding device. This way, by making said tool holding device rotate by 180°, one between said first tool and said second tool can be brought, alternately, in correspondence to the lower part of the tool holding device, i.e., in operating position in the direction of the wheel to be able to easily operate on the wheel itself. In practice, if said first tool is to be used, a check is made to see whether this is already in correspondence to the lower part of the tool holding device and, if it is not, the tool holding device is made to rotate by 180° to position said first tool in such operating position. In the same way, if said second tool is to be used, the same operations are performed on said second tool described with reference to said first tool.

In another preferred embodiment, said tool holding device is able to support a first tool, such as, e.g., said hooking tool, a second tool, such as, e.g., said pressure device, and a third tool, such as, e.g., said blade, said first, second and third tool being positioned in a way substantially radically equidistant, at about 120° the one from the other. This way, by-making said tool holding device rotate by 120°, one between said first, second and third tool can be brought, alternately, in correspondence to the lower part of the tool holding device, i.e., in an operating position in the direction of the wheel to be able to easily operate on the wheel itself, in the same way as has been seen above in the case of the tool holding device only supporting a first and a second tool.

Preferably, said vertical supporting column of the machine of the present invention also comprises a second arm arranged in a position substantially horizontal to the first arm described above; more preferably, said second arm is placed at a level of the column which is lower than said first arm. In the same way as described above with reference to the first arm, said second arm also has, at its extremity on the opposite side of the column, a rotatable tool holding device able to support tools useful in the tyre removal/fitting phase. This way, e.g., a blade supported by the tool holding device present on the second arm can be used to more easily free the second bead from the wheel rim once the first bead has already been freed.

Preferably, the machine of the present invention also comprises a second column; preferably, said second column is arranged vertically on said base for resting on the ground, in correspondence to a side of the base adjacent to that in correspondence to which said above-described first column is arranged. Preferably, with said second column is associated at least one arm, preferably at least two arms, sliding along the vertical axis of said second column, at the free extremity of each of said at least one arm being applied a roller, preferably with frustoconical shape, having a central cavity.

This way, before beginning the tyre beading operations, the height of said at least one arm of the second column can be regulated to bring the corresponding roller in correspondence to the tyre when it is still well fastened to the wheel rim. The shape of said roller is such as to adapt to the shape of the tyre and therefore, by applying a pressure downwards, the tyre can be detached from the rim.

Preferably, said second column has at least two arms, arranged in symmetric position with respect to the vertical axis of said second column, so the corresponding rollers associated with them apply a pressure on the tyre in two substantially diametrically opposite areas to make the detachment of the tyre from the rim easier, winning particularly consistent resistances by the tyre to detach from the wheel rim.

Preferably, said tilting means comprise a reduction gear tube integral with a self-centering plate suitable for sustaining said rotating clamping device, said self-centering plate having a pin around which the reduction gear tube swings along said swinging axis parallel to said second direction. More preferably, said reduction gear tube is integral with a reduction unit having a reduction gear head. Preferably, said reduction gear is operated by a cylinder.

Preferably, said self-centering plate is sustained by two supporting uprights fastened to the plane of said slide.

### Brief Description of the Drawings

Other characteristics and advantages of the present invention will become more evident from the detailed description of a preferred, but not sole, embodiment, illustrated purely as an example but not limited to the annexed drawings in which:
Figure 1 is a schematic and partial perspective view of a machine according to the present invention;
Figure 2 is a schematic and partial side section view of the tilting means of the machine according to the present invention, in a resting position;
Figure 3 is a schematic and partial front view of the tilting means of Figure 2, in a tilting position.

### Embodiments of the Invention

The following detailed description relates to a particular embodiment of a tyre-changing machine 1 according to the present invention, without limiting its contents.

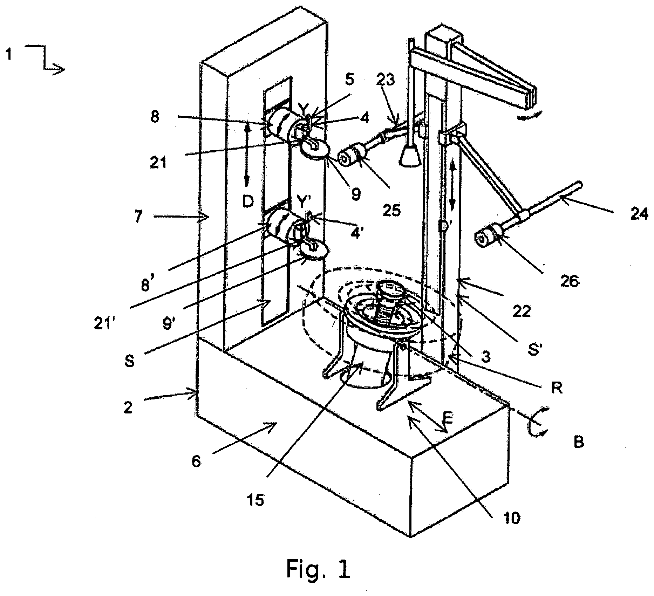

Reference must be initially made to Figure 1. The machine 1 comprises a frame 2 which supports at least one rotating clamping device 3 suitable for sustaining a wheel R of vehicles and causing such wheel R to rotate around a work axis A. Advantageously, the frame 2 comprises a base 6 for resting on the ground, which supports the rotating clamping device 3 so the latter is turned upwards. From the base 6, a first supporting column 7 extends upwards, on the side part of which, turned towards the rotating clamping device 3, is fitted a first arm 8 which extends horizontally with respect to the column 7, towards the rotating clamping device 3 itself. At the free extremity of the arm 8, that on the opposite side with respect to the column 7, a tool holding device 21 can be seen which is rotatable around the rotation line Y along the arm 8. The tool holding device 21, as shown in the Figure 1, supports, in correspondence to its lower extremity, a pushing tool 9 and, in correspondence to its upper extremity, a hooking tool 4. In this configuration, the pushing tool 9 is in use position towards the wheel R and can be used to push the tyre downwards and thus make its detachment from the rim of the wheel R easier. It is easy to appreciate however that, by making the tool holding device 21 rotate by 180° around the rotation line Y, the hooking tool 4 and the pushing tool 9 end up in an inverted position with respect to that shown in Figure 1, so that, this time, it is the hooking tool 4 which is in the use position to carry out the first bead breaking operation. The hooking tool 4 is arranged in a substantially vertical way downwards, parallel to the erect longitudinal side of the supporting column 7, and having an elongated portion 5, suitable for being inserted tangentially between the first bead of the tyre and the rim of the wheel R, for the extraction of the first bead.

Furthermore, the Figure 1 also shows a second arm 8' arranged in a substantially horizontal position, at a lower level of the column 7 with respect to the first arm 8. In the same way as described above with reference to the first arm 8, the second arm 8' also has, at its extremity on the opposite side of the supporting column 7, a tool holding device 21' which is rotatable around the rotation line Y' along the second arm 8' and which is able to support, in correspondence to its lower and upper extremities, a pushing tool 9' and a hooking tool 4', the positions of which can be exchanged following a 180° rotation of the tool holding device 21'. This way, for example, the hooking tool 4' associated with the lower second arm 8' can be used to more easily free the second bead from the rim of the wheel, once the first bead has already been freed.

Furthermore, the Figure 1 also shows a second supporting column 22 arranged vertically on the base 6 for resting on the ground, in correspondence to a side of the base 6 adjacent to that in correspondence to which the first column 7 described above is arranged. With the second column 22 are associated two arms 23, 24 sliding along the vertical axis of the second column 22, arranged in symmetric position with respect to the vertical axis of the second column 22. At the free extremity of each of the arms 23, 24 is fitted a corresponding roller 25, 26, with frustoconical shape, having a central cavity. Such rollers 25, 26 can be used to push the tyre downwards and thus make its detachment from the rim of the wheel R easier.

With the first column 7 are associated the first sliding means S suitable for moving the first arm 8 and the second arm 8' (and with these the corresponding tool holders 21 and 21' and the hooking tools supported by them) along a first direction D along the vertical direction of the first column 7.

In the same way, with the second column 22 are associated sliding means S' suitable for moving the arms 23, 24 (and with them the corresponding rollers 25, 26) along the direction D' along the vertical direction of the second column 22.

In one embodiment, such sliding means S and S', in practice, consist of movement means for moving the arms along the respective columns and comprise, e.g., hydraulic jacks (not shown), fitted vertically inside the columns 7 and 22 and positioned between the frame 2 and the arms.

With the base 6 are also associated the second sliding means 10 suitable for moving the rotating clamping device 3 along a second direction E orthogonal to the first direction D, i.e., along a horizontal direction with respect to the first column 7.

The second sliding means 10 comprise rectilinear guide means along which is fitted a slide 11, fitted on a frame 2, which supports the rotating clamping device 3. The second sliding means 10 also have second hydraulic jacks (not shown in the illustration) having one extremity associated integral with the frame 2 and the opposite extremity which insists instead on one of the sleeves of the slide 11. The second hydraulic jacks are in practice filled and emptied of fluid under pressure to move the rotating clamping device 3 towards the column 7 along the direction E.

Advantageously, between the rotating clamping device 3 and the slide 11 are placed tilting means 20 which allow the rotating clamping device 3 to swing around the tilting axis B parallel to the second direction E.

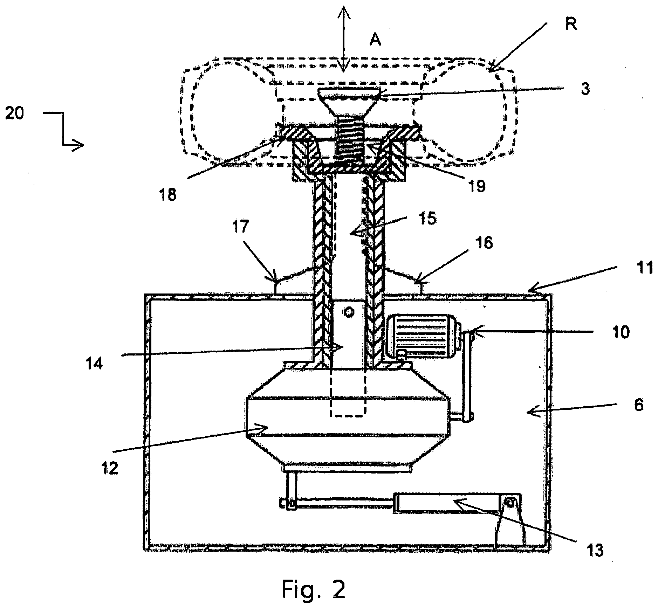

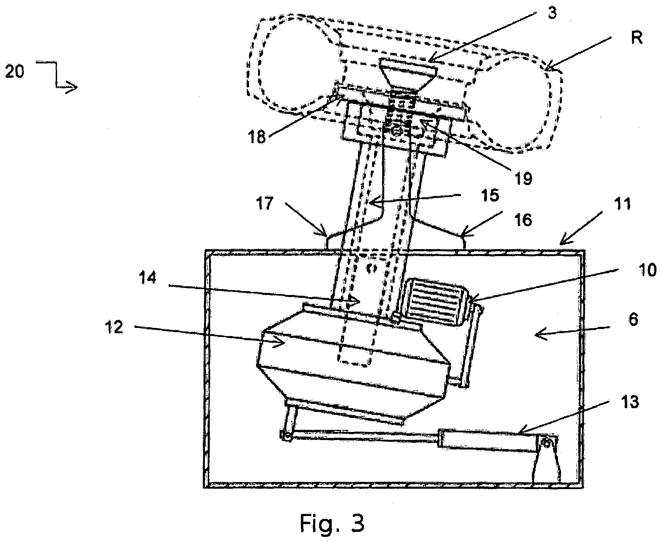

As can be better seen in the Figures 2 and 3, in one embodiment of the tyre-changing machine 1 of the present invention, the tilting means 20 are made up of a reduction gear 12 operated by a cylinder 13, wherein the reduction gear 12, positioned underneath the slide 11, has a head 14 inserted in and integral with a reduction gear tube 15, which protrudes beyond the plane of the slide 11. On such plane of the slide 11 are fastened the respective bases of two fixed vertical supporting uprights 16, 17 which support, in correspondence to their extremities opposite those of their bases, a self-centering plate 18, integral with the movement of the reduction gear tube 15. The two supporting uprights 16, 17 are fastened so their bases are in symmetric position with respect to the reduction gear tube 15. In correspondence to the lower part of the self-centering plate 18 a pin 19 is provided around which swings the reduction gear tube 15, along the tilting axis B parallel to the direction E towards the first supporting column 7. Consequently, by operating the cylinder 13 by means of a motor, the reduction gear 12, its head 14, the reduction gear tube 15 and the self-centering plate 18, on which is fitted the clamping device 3 for the wheel R, are made to move by swinging around the pin 19. This way, the swinging is achieved of the wheel R around the tilting axis B parallel to the direction E towards the column 7.

A method will now be described below for simply and effectively removing the tyre from the rim of a wheel R using the tyre-changing machine 1 of the present invention.

A wheel R of a vehicle, made up of a rim around which a tyre is present, is placed on the clamping device 3 to be able to extract the tyre from the rim. Depending on how strong the adhesion is of the tyre to the rim and, consequently, how must pressure has to be applied to loosen such adhesion and therefore separate the tyre from the rim, a choice can be made whether to submit the tyre to the pressure applied by the pair of rollers 25, 26 associated with the arms 23, 24 of the second column 22 (in case a strong pressure has to be applied on two diametrically opposite areas of the tyre) or to the pushing device 9 associated with the arm 8 of the first column 7 (in case a lesser pressure is required to be applied on just one area of the tyre). In any case, by continuing to lower the arms 23, 24 or 8, the two rollers 25 and 26 or the pushing device 9, respectively, apply considerable pressure on the tyre, such as to push it downwards, until it detaches from the rim of the wheel R. Subsequently, the plane of the slide 11, and with it the clamping device 3 and the wheel R fitted on it, is moved closer to the first column 7 by means of first sliding means S along the second direction E, until the wheel R is at a preestablished distance from the first column 7 according to the type and size of the tyre P.

The cylinder 13 is then operated to cause the reduction gear tube 15 to swing around the tilting axis B parallel to the second direction E towards the first supporting column 7; integral with the reduction gear tube 15, the self-centering plate 18, the clamping device 3 and, consequently, the wheel R also rotate. The cylinder 13 is blocked when the wheel R is in oblique position with an angle of around 15° with respect to the horizontal plane. By starting the first sliding means S, the tool holding device 21 is then lowered along the first direction D, i.e., along the vertical direction of the first supporting column 7, until the elongated portion 5 of the hooking tool 4, previously positioned in correspondence to the lower portion of the tool holding device 21 by means of a 180° rotation of the tool holding device 21 itself, comes into contact with the wheel R. Such contact between the hooking tool 4 and the wheel R occurs in correspondence to a point of the rim which is the closest possible to the column 7 and which is at a more or less intermediate height of the wheel R between the lowest point and the highest point of the wheel R with respect to the supporting plane of the slide 11. In such contact point, the hooking tool 4 has enough room and ease of operation inside the rim and is therefore in such a position that its elongated portion 5 can be easily inserted tangentially in the rim channel between the rim itself and the first bead of the tyre of the wheel R, without having to force in any particular way against the tyre itself. At this point, the hooking tool 4 lifts up the portion of the first bead in correspondence to the hooking tool above the rim; by then making the wheel R rotate slightly around the work axis A, thanks to the tilted position of the wheel, a major portion of the bead will find itself above the rim and, from here, after a few seconds, the entire first bead of the tyre will be extracted from the rim of the wheel R.

The rotation R is then blocked around the work axis A, the tyre being pushed from below upwards by means of a roller and then the second bead also being lifted using the hooking tool 4' associated with the second arm 8' to fully extract the tyre from the rim. At this point, the cylinder 13 is operated so as to return the clamping device 3 to horizontal position and remove the wheel R from the tyre-changing machine 1 of the present invention.

Naturally, to persons expert in the field, many changes and variations to the described preferred embodiments will be evident, while always remaining within the scope of the invention.

For example, a tyre-changing machine can be made wherein two distinct clamping devices 3 are present, positioned symmetrically with respect to the first supporting column 7, suitable for accommodating on them two wheels R, one for each clamping device 3, to be able to act separately and at the same time on the two wheels R with the same tyre-changing machine.

Consequently, the invention is not limited to the described preferred embodiments, only illustrated by way of example and in a non-limitative way, but is defined by the following claims.

## Claims

1. Machine (1) for the fitting and removal of tyres of vehicle wheels (R), **characterized in that** said machine (1) comprises:
- at least a supporting frame (2) for at least a rotating clamping device (3) suitable for supporting at least a wheel (R) of vehicles and place it in rotation around a work axis (A),
- at least a hooking tool (4) for hooking the tyre which is associable with said frame (2) and is provided with an elongated portion (5) which can be inserted between the tyre bead of said wheel (R) and the rim of said wheel (R) in order to remove said bead,
- first sliding means (S) associable with said frame (2) and suitable for moving at least said hooking tool (4) along a first direction (D) substantially parallel to said portion of the tool (5),
- second sliding means (10) associable with said frame (2) and suitable for moving at least said rotating clamping device (3) along a second direction (E) substantially orthogonal to said portion of the tool (5), and also
- tilting means (20) of the rotating clamping device (3), said tilting means (20) being suitable for rotating around a tilting axis (B) parallel to said second direction (E) and for momentarily blocking said wheel (R) in an oblique position wherein said hooking tool (4) is allowed to be inserted tangentially in the inner channel of said rim.

2. Machine (1) according to claim 1, wherein said frame (2) comprises a ground level support base (6) which supports a slide (11) sustaining said rotating clamping device (3).

3. Machine (1) according to claim 2 further comprising a supporting column (7) of said hooking tool (4), said supporting column (7) being associated with said support base (6).

4. Machine (1) according to any one of the preceding claims, wherein said hooking tool (4) is mounted on an arm (8) which is substantially horizontal and can be associated with said column (7).

5. Machine (1) according to any one of the preceding claims, wherein said hooking tool (4) is arranged in a substantially vertical manner.

6. Machine (1) according to any one of the preceding claims, wherein said hooking tool (4) is supported by a tool holding device (21), said tool holding device (21) being associated with said arm (8) and being able to rotate around a rotation line (Y) parallel to said arm (8).

7. Machine (1) according to any one of the preceding claims, wherein said tool holding device (21) is able to support at least said hooking tool (4) and a pushing tool (9).

8. Machine (1) according to any one of the preceding claims, wherein said tilting means (20) comprise a reduction gear tube (15) which is integral with a self-centering plate (18) suitable for supporting said rotating clamping device (3), said self-centering plate (18) being provided with a pin (19) around which the reduction gear tube (15) swings along said tilting axis (B) parallel to said second direction (E).

9. Machine (1) according to claim 8, wherein said reduction gear tube (15) is integral with a reduction gear (12) provided with a reduction gear head (14).

10. Machine (1) according to claim 8 or 9, wherein tilting of said reduction gear tube (15) around said tilting axis (B) is operated by a cylinder (13).

11. Machine (1) according to any one of claims 8 to 10, wherein said self-centering plate (18) is supported by two supporting uprights (16, 17) fixed to the plane of said slide (11).

12. Machine (1) according to any one of the preceding claims, wherein in said oblique position said wheel (R) reaches an angle between 5° and 25° with respect to the horizontal plane.

13. Method for removing a tyre from a rim of a wheel (R) using the machine (1) according to one or more of claims 1 to 12, **characterized in that** said method comprises the steps of:
- swinging said wheel (R) around said tilting axis (B);
- momentarily blocking said wheel (R) in said oblique position;
- starting said first sliding means (S) and inserting said hooking tool (4) tangentially in said inner channel of the rim between said tyre bead and said rim;
- lifting up a portion of said tyre bead above the rim by means of said hooking tool (4);
- making the wheel (R) rotate around said work axis (A) so that to extract the entire bead from the rim.

## Patentansprüche

1. Maschine (1) zum Anbringen und Entfernen von Reifen von Fahrzeugrädern (R), **dadurch gekennzeichnet, dass** die Maschine (1) Folgendes umfasst:
- mindestens einen Stützrahmen (2) für mindestens eine sich drehende Klemmeinrichtung (3), geeignet zum Tragen wenigstens eines Rades (R) von Fahrzeugen und Bringen desselben in Drehung um eine Arbeitsachse (A),
- mindestens ein Einhakwerkzeug (4) zum Einhaken des Reifens, das mit dem Rahmen (2) assoziierbar ist und mit einem länglichen Abschnitt (5) versehen ist, der zwischen der Reifenwulst des Rades (R) und der Felge des Rades (R) eingefügt werden kann, um die Wulst zu entfernen,
- erste Verschiebungsmittel (S), die mit dem Rahmen (2) assoziierbar und dafür geeignet sind, das wenigstens eine Einhakwerkzeug (4) entlang einer ersten Richtung (D) im Wesentlichen parallel zu dem Abschnitt des Werkzeugs (5) zu bewegen,
- zweite Verschiebungsmittel (10), die mit dem Rahmen (2) assoziierbar und dafür geeignet sind, die mindestens eine sich drehende Klemmeinrichtung (3) entlang einer zweiten Richtung (E) im Wesentlichen senkrecht zu dem Abschnitt des Werkzeugs (5) zu bewegen, und ebenfalls
- Neigungsmittel (20) der sich drehenden Klemmeinrichtung (3), wobei die Neigungsmittel (20) zum Drehen um eine Neigungsachse (B) parallel zu der zweiten Richtung (E) und zum zeitweiligen Blockieren des Rades (R) in einer schrägen Stellung geeignet sind, das Einhakwerkzeug (4) tangential in den inneren Kanal der Felge eingefügt werden kann.

2. Maschine (1) nach Anspruch 1, wobei der Rahmen (2) eine ebenerdige Stützbasis (6) umfasst, die einen Schlitten (11) stützt, der die sich drehende Klemmeinrichtung (3) trägt.

3. Maschine (1) nach Anspruch 2, die ferner eine Tragsäule (7) des Einhakwerkzeugs (4) umfasst, wobei die Tragsäule (7) mit der Stützbasis (6) assoziiert ist.

4. Maschine (1) nach einem der vorhergehenden Ansprüche, wobei das Einhakwerkzeug (4) an einem Arm (8) angebracht ist, der im Wesentlichen horizontal ist und mit der Tragsäule (7) assoziiert werden kann.

5. Maschine (1) nach einem der vorhergehenden Ansprüche, wobei das Einhakwerkzeug (4) auf eine im Wesentlichen vertikale Weise angeordnet ist.

6. Maschine (1) nach einem der vorhergehenden Ansprüche, wobei das Einhakwerkzeug (4) durch eine Werkzeughalteeinrichtung (21) getragen wird, wobei die Werkzeughalteeinrichtung (21) mit dem Arm (8) assoziiert ist und dazu in der Lage ist, sich um eine Drehlinie (Y) parallel zu dem Arm (8) zu drehen.

7. Maschine (1) nach einem der vorhergehenden Ansprüche, wobei die Werkzeughalteeinrichtung (21) dazu in der Lage ist, wenigstens das Einhakwerkzeug (4) und ein Schiebewerkzeug (9) zu tragen.

8. Maschine (1) nach einem der vorhergehenden Ansprüche, wobei die Neigungsmittel (20) eine Untersetzungsgetriebe-Röhre (15) umfassen, die integral mit einer selbstzentrierenden Platte (18), geeignet zum Tragen der sich drehenden Klemmeinrichtung (3) ist, wobei die selbstzentrierende Platte (18) mit einem Zapfen (19) versehen ist, um den die Untersetzungsgetriebe-Röhre (15) entlang der Neigungsachse (B) parallel zu der zweiten Richtung (E) schwenkt.

9. Maschine (1) nach Anspruch 8, wobei die Untersetzungsgetriebe-Röhre (15) einstöckig mit einem Untersetzungsgetriebe (12) ausgebildet ist, das mit einem Untersetzungsgetriebe-Kopf (14) versehen ist.

10. Maschine (1) nach Anspruch 8 oder 9, wobei ein Neigen der Untersetzungsgetriebe-Röhre (15) um die Neigungsachse (B) durch einen Zylinder (13) ausgeführt wird.

11. Maschine (1) nach einem der Ansprüche 8 bis 10, wobei die selbstzentrierende Platte (18) durch zwei stützende Pfosten (16, 17) getragen wird, die an der Ebene des Schlittens (11) befestigt sind.

12. Maschine (1) nach einem der vorhergehenden Ansprüche, wobei das Rad (R) in der schrägen Stellung einen Winkel zwischen 5° und 25° in Bezug auf die horizontale Ebene erreicht.

13. Verfahren zum Entfernen eines Reifens von einer Felge eines Rades (R) unter Verwendung der Maschine (1) nach einem der Ansprüche 1 bis 12, **dadurch gekennzeichnet, dass** das Verfahren die folgenden Schritte umfasst:
- das Schwenken des Rades (R) um die Neigungsachse (B),
- das zeitweilige Blockieren des Rades (R) in der schrägen Stellung,
- das Starten der ersten Verschiebungsmittel (S) und das tangentiale Einfügen des Einhakwerkzeugs (4) in den inneren Kanal der Felge zwischen der Reifenwulst und der Felge,
- das Anheben eines Abschnitts der Reifenwulst über die Felge mit Hilfe des Einhakwerkzeugs (4),
- das Drehenlassen des Rades (R) um die Arbeitsachse (A), um so die gesamte Wulst von der Felge abzuziehen.

## Revendications

1. Machine (1) pour le montage et le démontage de pneumatiques de roues de véhicules (R), **caractérisée en ce que** ladite machine (1) comprend :
- au moins un bâti-support (2) pour au moins un dispositif de serrage rotatif (3) apte à supporter au moins une roue (R) de véhicules et la placer en rotation autour d'un axe de travail (A),
- au moins un outil d'accrochage (4) pour accrocher le pneumatique qui est apte à être associé audit bâti (2) et est pourvu d'une portion allongée (5) qui peut être insérée entre le bourrelet de pneumatique de ladite roue (R) et la jante de ladite roue (R) afin de dégager ledit bourrelet,
- des premiers moyens de coulissement (S) aptes à être associés audit bâti (2) et aptes à déplacer au moins ledit outil d'accrochage (4) selon une première direction (D) sensiblement parallèle à ladite portion de l'outil (5),
- des seconds moyens de coulissement (10) aptes à être associés audit bâti (2) et aptes à déplacer au moins ledit dispositif de serrage rotatif (3) selon une seconde direction (E) sensiblement orthogonale à ladite portion de l'outil (5), et aussi
- des moyens de basculement (20) du dispositif de serrage rotatif (3), lesdits moyens de basculement (20) étant aptes à tourner en rotation autour d'un axe de basculement (B) parallèle à ladite seconde direction (E) et à momentanément bloquer ladite roue (R) dans une position oblique dans laquelle ledit outil d'accrochage (4) est apte à être inséré tangentiellement dans la gouttière intérieure de ladite jante.

2. Machine (1) selon la revendication 1, dans laquelle ledit bâti (2) comprend un socle support au niveau du sol (6) qui supporte une glissière (11) soutenant ledit dispositif de serrage rotatif (3).

3. Machine (1) selon la revendication 2 comprenant en outre une colonne porteuse (7) dudit outil d'accrochage (4), ladite colonne porteuse (7) étant associée audit socle support (6).

4. Machine (1) selon l'une quelconque des revendications précédentes, dans laquelle ledit outil d'accrochage (4) est monté sur un bras (8) qui est sensiblement horizontal et peut être associé à ladite colonne (7).

5. Machine (1) selon l'une quelconque des revendications précédentes, dans laquelle ledit outil d'accrochage (4) est agencé de manière sensiblement verticale.

6. Machine (1) selon l'une quelconque des revendications précédentes, dans laquelle ledit outil d'accrochage (4) est supporté par un dispositif porte-outil (21), ledit dispositif porte-outil (21) étant associé audit bras (8) et pouvant tourner en rotation selon une ligne de rotation (Y) parallèle audit bras (8).

7. Machine (1) selon l'une quelconque des revendications précédentes, dans laquelle ledit dispositif porte-outil (21) est apte à supporter au moins ledit outil d'accrochage (4) et un outil poussoir (9).

8. Machine (1) selon l'une quelconque des revendications précédentes, dans laquelle lesdits moyens de basculement (20) comprennent un tube à réducteur (15) qui est solidaire d'un plateau auto-centreur (18) apte à supporter ledit dispositif de serrage rotatif (3), ledit plateau auto-centreur (18) étant pourvu d'un axe (19) autour duquel le tube à réducteur (15) bascule selon ledit axe de basculement (B) parallèle à ladite seconde direction (E).

9. Machine (1) selon la revendication 8, dans laquelle ledit tube à réducteur (15) est solidaire d'un engrenage réducteur (12) pourvu d'une tête d'engrenage réducteur (14).

10. Machine (1) selon la revendication 8 ou 9, dans laquelle le basculement dudit tube à réducteur (15) autour dudit axe de basculement (B) est actionné par un vérin (13).

11. Machine (1) selon l'une quelconque des revendications 8 à 10, dans laquelle ledit plateau auto-centreur (18) est supporté par deux montants de support (16, 17) fixés au plan de ladite glissière (11).

12. Machine (1) selon l'une quelconque des revendications précédentes, dans laquelle dans ladite position oblique ladite roue (R) atteint un angle entre 5° et 25° par rapport au plan horizontal.

13. Procédé de démontage d'un pneumatique d'une jante d'une roue (R) à l'aide de la machine (1) selon l'une ou plusieurs des revendications 1 à 12, **caractérisé en ce que** ledit procédé comprend les étapes suivantes :
- faire basculer ladite roue (R) autour dudit axe de basculement (B);
- momentanément bloquer ladite roue (R) dans ladite position oblique;
- actionner lesdits premiers moyens de coulissement (S) et insérer ledit outil d'accrochage (4) tangentiellement dans ladite gouttière intérieure de la jante entre ledit bourrelet de pneumatique et ladite jante ;
- soulever une portion dudit bourrelet de pneumatique au-dessus de la jante au moyen dudit outil d'accrochage (4) ;
- faire tourner la roue (R) en rotation autour dudit axe de travail (A) de manière à extraire la totalité du bourrelet de la jante.
